(19) Europäisches Patentamt
European Patent Office
Office européen des brevets

(11) EP 4 545 592 A1

(12) EUROPEAN PATENT APPLICATION
published in accordance with Art. 153(4) EPC

(43) Date of publication:
30.04.2025 Bulletin 2025/18

(21) Application number: 23923076.6

(22) Date of filing: 26.12.2023

(51) International Patent Classification (IPC):
*C08K 5/11* (2006.01) *C08K 5/09* (2006.01)
*C08K 5/17* (2006.01) *C08K 3/16* (2006.01)
*C08L 33/04* (2006.01) *C08J 3/24* (2006.01)

(52) Cooperative Patent Classification (CPC):
**C08J 3/24; C08K 3/16; C08K 5/09; C08K 5/11; C08K 5/17; C08L 33/04**

(86) International application number:
PCT/KR2023/021573

(87) International publication number:
WO 2024/172277 (22.08.2024 Gazette 2024/34)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 16.02.2023 KR 20230020907

(71) Applicant: **LG Chem, Ltd.**
**Yeongdeungpo-gu**
**Seoul 07336 (KR)**

(72) Inventors:
- **LEE, Hoyong**
  **Daejeon 34122 (KR)**
- **MIN, Ji Hong**
  **Daejeon 34122 (KR)**
- **LEE, Jin Woo**
  **Daejeon 34122 (KR)**

(74) Representative: **Plasseraud IP**
**104 Rue de Richelieu**
**CS92104**
**75080 Paris Cedex 02 (FR)**

# (54) SUPERABSORBENT POLYMER COMPOSITION AND PREPARATION METHOD THEREOF

(57) The composition of super absorbent polymer and preparation method thereof according to the present disclosure are characterized by exhibiting excellent deodorization capacity while minimizing property deterioration of super absorbent polymer, by mixing a diester-based compound with the super absorbent polymer.



Processed by Luminess, 75001 PARIS (FR)

## Description

## [TECHNICAL FIELD]

CROSS-REFERENCE TO RELATED APPLICATION(S)

This application claims the benefit of Korean Patent Application No. 10-2023-0020907 filed on February 16, 2023 with the Korean Intellectual Property Office, the disclosures of which are herein incorporated by reference in their entirety.

The present disclosure relates to a composition of super absorbent polymer and a preparation method thereof. More specifically, the present disclosure relates to a composition of super absorbent polymer having deodorization capacity, and a preparation method thereof.

## [BACKGROUND ART]

Super absorbent polymer (SAP) is synthetic polymer material that can absorb moisture of 500 to 1000 times of self-weight, and is also named differently as super absorbency material (SAM), absorbent gel material (AGM), etc. according to developing companies. The super absorbent polymer began to be commercialized as sanitary items, and currently, it is being widely used as water-holding material for soil, water stop material for civil engineering and architecture, sheets for raising seedings, freshness preservatives in the field of food circulation, fomentation material, etc., besides hygienic goods such as a disposable diaper for children, and the like.

In most cases, such super absorbent polymer is being widely used in the field of hygienic goods such as diapers or sanitary pad, and the like. **In** the hygienic goods, the super absorbent polymer is generally spread in pulp and included. However, recently, to provide hygienic goods such as diapers having thinner thickness, development of diapers having decreased pulp content, or even pulpless diapers in which pulp is not used at all, is being actively progressed.

As such, in the case of hygienic goods having decreased pulp, or pulpless hygienic goods, super absorbent polymer is included at relatively high ratio, and such super absorbent polymer particles are included inevitably in multilayers. The super absorbent polymer should basically exhibit high absorption performance and absorption speed so that the entire super absorbent polymer particles included in multilayers can more efficiently absorb liquid such as urine. Moreover, absorbed liquid should not be leaked even under external pressure, and besides, the super absorbent polymer should have permeability so as to properly maintain the original shape even when it absorbs liquid and is swollen.

Thus, a lot of research is being progressed, such as surface crosslinking, for improving basic absorption force and water retention capacity.

However, super absorbent polymer may be used in hygienic goods, and in this case, due to odor of absorbed liquids such as excretions of human and pet, feeling during use may be degraded. Particularly, inhibition of odor generated from absorbed liquids is needed.

Thus, previously, adding organic acid or antibacterial substance as deodorization agents was considered to confer deodorization performance to super absorbent polymer, but practically, odor generated from absorbed liquids is not limited to ammonia, but odor is generated from various substances, and thus, it was difficult to inhibit odor by using only one kind of substance such as organic acid or antibacterial substance.

Thus, a demand for odor inhibition as well as basic properties of super absorbent polymer including absorption power and water retention capacity is gradually increasing. Thus, preparation of super absorbent polymer having excellent deodorization capacity is needed.

## [DETAILED DESCRIPTION OF THE INVENTION]

### [Technical Problem]

It is an object of the invention to provide a composition of super absorbent polymer having deodorization capacity and a preparation method thereof.

More specifically, it is an object of the invention to provide a composition of super absorbent polymer having excellent deodorization capacity with minimized property deterioration, and preparation method thereof.

### [Technical Solution]

To solve the objects, according to the present disclosure, there is provided a composition of super absorbent polymer comprising:

super absorbent polymer comprising base resin comprising crosslinked polymer formed by crosslinking polymerization of acrylic acid-based monomers having at least partially neutralized acid groups and an internal crosslinking agent, and a surface crosslink layer formed on the surface of the base resin, in which the crosslinked polymer is additionally crosslinked by a surface crosslinking agent; and a diester-based compound represented by the following Chemical Formula 1,

wherein the diester-based compound is included in the surface crosslink layer of the super absorbent polymer, separately from the super absorbent polymer, or both:

[Chemical Formula 1]

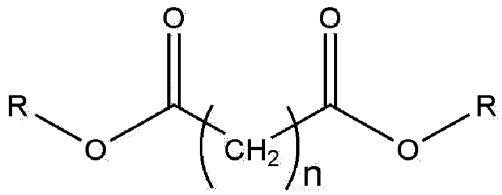

in the Chemical Formula 1, n is an integer of 1 to 10, and
R is $C_{1-20}$ linear or branched alkyl.

According to the present disclosure, there is also provided a method for preparing a composition of super absorbent polymer, comprising steps of:

subjecting acrylic acid-based monomers having at least partially neutralized acid groups to crosslinking polymerization, in the presence of an internal crosslinking agent and a polymerization initiator, to form hydrogel polymer (step 1);
drying and grinding the hydrogel polymer to prepare base resin comprising crosslinked polymer (step 2);
mixing a surface crosslinking agent with the base resin to prepare a mixture (step 3); and
heat treating the mixture to prepare super absorbent polymer having a surface crosslink layer formed on the surface of the base resin (step 4),
wherein a diester-based compound represented by the following Chemical Formula 1 is included during the surface crosslinking reaction, after the surface crosslinking reaction, or both:

[Chemical Formula 1]

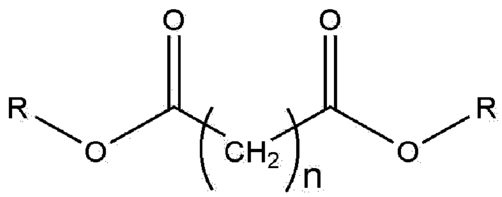

in the Chemical Formula 1, n is an integer of 1 to 10, and
R is $C_{1-20}$ linear or branched alkyl.

**[ADVANTAGEOUS EFFECTS]**

As explained above, the present disclosure provides a composition of super absorbent polymer that not only has excellent deodorization capacity but also retains excellent absorption performance by applying a diester-based compound to super absorbent polymer, and preparation method thereof.

**[DETAILED DESCRIPTION OF THE EMBODIMENTS]**

The terms used herein are only to explain specific embodiments, and are not intended to limit the invention. A singular expression includes a plural expression thereof, unless the context clearly indicates otherwise. Throughout the specification, the terms "comprise", "equipped" or "have", etc. are intended to designate the existence of practiced characteristic, number, step, constructional element or combinations thereof, and they are not intended to preclude the

possibility of existence or addition of one or more other characteristics, numbers, steps, constructional elements or combinations thereof.

Although various modifications can be made to the invention and the invention may have various forms, specific examples will be illustrated and explained in detail below. However, it should be understood that it is not intended to limit the invention to specific disclosure, and that the invention includes all the modifications, equivalents or replacements thereof without departing from the spirit and technical scope of the invention.

Hereinafter, a method for preparing super absorbent polymer and super absorbent polymer according to specific embodiments of the invention will be explained in detail.

Before that, technical terms used herein are only for mentioning specific embodiments, and they are not intended to restrict the invention. The singular expressions used herein may include the plural expressions unless the context clearly indicate otherwise.

For reference, "super absorbent polymer" as used herein may mean super absorbent polymer itself, or it may be used to include polymers made suitable for productization through additional processes, for example, surface crosslinking, fine powder reassembling, drying, grinding, classification, and the like, according to the context.

Further, as used herein, "base resin" or "base resin powder" means particle or powder obtained by drying and grinding polymer polymerized from acrylic acid-based monomers, before passing through surface modification or surface crosslinking step as described later.

**(Composition of super absorbent polymer)**

According to one embodiment of the invention, there is provided a composition of super absorbent polymer.

The composition of super absorbent polymer comprises: super absorbent polymer comprising: base resin comprising crosslinked polymer formed by crosslinking polymerization of acrylic acid-based monomers having at least partially neutralized acid groups and an internal crosslinking agent, and a surface crosslink layer formed on the surface of the base resin, in which the crosslinked polymer is additionally crosslinked by a surface crosslinking agent; and a diester-based compound,

wherein the diester-based compound is included in the surface crosslink layer of the super absorbent polymer, separately from the super absorbent polymer, or both:

The acrylic acid-based monomers may be any monomers commonly used in the preparation of super absorbent polymer. As non-limiting examples, the acrylic acid-based monomer may be a compound represented by the following Chemical Formula 1:

[Chemical Formula 2] $R^1$-COOM$^1$

In the Chemical Formula 2,

$R^1$ is a C2-5 alkyl group comprising an unsaturated bond,
$M^1$ is a hydrogen atom, a monovalent or divalent metal, an ammonium group or an organic amine salt.

Preferably, the monomers may be one or more selected from the group consisting of acrylic acid, methacrylic acid, and monovalent metal salts, divalent metal salts, ammonium salts and organic amine salts thereof.

The acrylic acid-based monomers may have acid groups, and at least a part of the acid groups may be neutralized. Preferably, the monomers partially neutralized with alkali substance such as sodium hydroxide, potassium hydroxide, ammonium hydroxide and the like, may be used.

Wherein, the degree of neutralization of the monomers may be 40 to 95 mol%, or 40 to 80 mol%, or 45 to 75 mol%. Although the range of the neutralization degree may vary according to the final properties, if the neutralization degree is too high, neutralized monomers may be precipitated, and thus, it may be difficult to smoothly progress polymerization, and to the contrary, if the neutralization degree is too low, absorption force of polymer may be significantly lowered, and it may exhibit elastic rubber-like properties, which is difficult to handle.

Meanwhile, to improve the properties of the polymer polymerized from acrylic acid-based monomers, the polymerization is conducted in the presence of a crosslinking agent ("internal crosslinking agent"). The crosslinking agent is for internal crosslinking of hydrogel polymer, and is used separately from a "surface crosslinking agent" described later.

As the internal crosslinking agent, any compounds can be used so long as they enable the introduction of crosslink during polymerization of the acrylic acid-based monomers. As non-limiting examples, as the internal crosslinking agent, multifunctional crosslinking agents such as N,N'-methylenebisacrylamide, trimethylolpropane tri(meth)acrylate, ethyleneglycol di(meth)acrylate, polyethyleneglycol di(meth)acrylate, propyleneglycol di(meth)acrylate, polypropyleneglycol di(meth)acrylate, butanediol di(meth)acrylate, butyleneglycol di(meth)acrylate, diethyleneglycol di(meth)acrylate, hexanediol di(meth)acrylate, triethyleneglycol di(meth)acrylate, tripropyleneglycol di(meth)acrylate, tetraethyleneglycol

di(meth)acrylate, dipentaerythritol pentaacrylate, glycerin tri(meth)acrylate, pentaerythritol tetraacrylate, triarylamine, ally (meth)acrylate, ethyleneglycol diglycidyl ether, propyleneglycol, glycerin, or ethylenecarbonate may be used alone or in combinations, but it is not limited thereto.

Such an internal crosslinking agent may be used at the concentration of 0.001 to 1 wt%, or 0.01 to 0.8 wt%, or 0.1 to 0.7 wt%, based on the monomer composition. If the concentration of the internal crosslinking agent is too low, absorption speed of polymer may decrease, and gel strength may become weak. To the contrary, if the concentration of the internal crosslinking agent is too high, absorption force of super absorbent polymer may decrease, and thus, it may not be preferable as an absorbent.

Besides, the monomer composition may further comprise additives such as a plasticizer, a preservation stabilizer, an antioxidant, etc., as necessary.

The surface crosslink layer is formed by additional crosslinking of the crosslinked polymer by a surface crosslinking agent, wherein the surface crosslinking agent is not specifically limited so long as it is commonly used for surface crosslinking of super absorbent polymer and is a compound capable of reacting with the functional groups of the polymer.

Preferably, to improve the properties of produced super absorbent polymer, as the surface crosslinking agent, one or more selected from the group consisting of polyhydric alcohol compounds; epoxy compounds; polyamine compounds; haloepoxy compounds; condensation products of haloepoxy compounds; oxazoline compounds; mono-, di- or polyoxazolidinone compounds; cyclic urea compounds; multivalent metal salts; and alkylene carbonate compounds may be used.

Specifically, as the examples of the polyhydric alcohol compound, one or more selected from the group consisting of mono-, di-, tri- tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexandiol, and 1,2-cyclohexanedimethanol may be used.

Further, as the epoxy compound, ethylene glycol diglycidyl ether, glycidol, or the like may be used, and as the polyamine compound, one or more selected from the group consisting of ethylenediamine, diethylenetriamine, triethylenetetramine, tetraethylenepentamine, pentaethylenehexamine, polyethyleneimine, and polyamidepolyamine may be used.

Further, as the haloepoxy compound, epichlorohydrin, epibromohydrin, or $\alpha$-methylepichlorohydrin may be used, and as the mono-, di- or polyoxazolidinone compound, for example, 2-oxazolidinone, and the like may be used.

Further, as the alkylene carbonate compound, ethylene carbonate, or the like may be used. These compounds may be used alone or in combinations. Meanwhile, to increase the efficiency of the surface crosslinking process, among these surface crosslinking agents, one or more kinds of C2-10 polyhydric alcohol compounds may be included.

The content of the surface crosslinking agent added may be appropriately selected according to the kind of the surface crosslinking agent added and reaction conditions, but commonly, it may be used in the amount of about 0.001 to about 5 parts by weight, preferably about 0.01 to about 3 parts by weight, or more preferably about 0.05 to about 2 parts by weight, based on 100 parts by weight of the polymer.

If the content of the surface crosslinking agent is too small, a surface crosslinking reaction may hardly occur, and if it is greater than 5 parts by weight, based on 100 parts by weight of the polymer, due to the excessive progression of surface crosslinking reaction, absorption capacity and properties may be deteriorated.

Meanwhile, the surface crosslinking agent may further comprise inorganic materials. As such inorganic material, one or more selected from the group consisting of silica, clay, alumina, silica-alumina composite material, titania, zinc oxide and aluminum sulfate may be used. The inorganic material may be used in the form of powder or liquid, and particularly, alumina powder, silica-alumina powder, titania powder, or a nano silica solution. The inorganic material may be used in the content of about 0.001 to about 1 part by weight, based on 100 parts by weight of the base resin.

The composition of super absorbent polymer according to one embodiment of the invention may comprise a diester-based compound as deodorization substance. Since the ester and hydrophobic functional group of the diester-based compound have affinity with malodorous substance, in case a super absorbent polymer composition comprising the diester-based compound is applied to hygienic products, odor of liquid absorbed in the hygienic products may be removed. The diester-based compound in one embodiment of the invention may be represented by the following Chemical Formula 1.

[Chemical Formula 1]

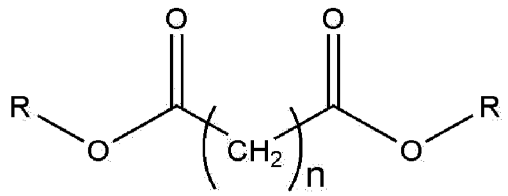

In the Chemical Formula 1, n may be an integer of 1 to 10, specifically an integer of 2 to 4.

R may be a $C_{1-20}$ linear or branched alkyl group. Specifically, R may be a $C_{3-4}$ linear or branched alkyl group. For example, R may be isopropyl or isobutyl.

The diester-based compound may be included in the surface crosslink layer of super absorbent polymer, or separately from super absorbent polymer, or both. Inclusion of the diester-based compound separately from super absorbent polymer means that the diester-based compound is mixed with super absorbent polymer having a surface crosslink layer, and thus, the diester-based compound exists on the external surface of the surface crosslink layer instead of inside the surface crosslink layer.

The diester-based compound may include one or more selected from the group consisting of diisopropyl adipate, diisobutyl succinate, diisobutyl glutarate, and diisobutyl adipate. Specifically, the diester-based compound may include one or more selected from the group consisting of diisopropyl adipate, diisobutyl succinate, and diisobutyl adipate.

The diester-based compound may be included in the content of 0.1 to 5.0 parts by weight, based on 100 parts by weight of the base resin. Specifically, the diester-based compound may be included in the content of 0.1 parts by weight or more, 0.2 parts by weight or more, 0.3 parts by weight or more, or 0.4 parts by weight or more and 5.0 parts by weight or less, 4.0 parts by weight or less, 3.0 parts by weight or less, 2.0 parts by weight or less, or 1.0 parts by weight or less or 0.5 parts by weight or less, based on 100 parts by weight of the base resin.

To exhibit deodorization capacity of an aimed level while maintaining unique absorption properties of super absorbent polymer, in the present disclosure, it is preferable that the diester-based compound, which is deodorization substance, is included in the above content range.

The composition of super absorbent polymer may further comprise one or more additives selected from the group consisting of a chelating agent, an iodine-based compound, and organic acid.

The composition of super absorbent polymer may comprise a chelating agent. In the case of a hygienic product comprising a super absorbent polymer composition, bacteria derived from skin, and the like may meet absorbed liquid to additionally generate odor by bacterial growth, but the chelating agent may inhibit such bacterial growth.

The chelating agent may include an amino acetate-based chelating agent. Specifically, the amino acetate-based chelating agent may include one or more selected from the group consisting of ethylene diamine tetraacetic acid (EDTA), L-glutamic acid diacetate (GLDA), methyl glycine diacetic acid (MGDA), hydroxyethyl ethylenediamine triacetic acid (HEDTA), ethanol diglycinic acid (EDG), diethylenetriamine pentaacetic acid (DTPA), and salts thereof. More specifically, the chelating agent may be ethylene diamine tetraacetic acid (EDTA).

Particularly, the amino acetate-based chelating agent can effectively inhibit growth of bacteria such E. coli, generated by odor generating substance. As a wearing time of a product passes, bacterial growth is accelerated by odor generating substance remaining in the product, thereby generating additional odor, but the amino acetate-based chelating agent may inhibit such bacterial growth to effectively reduce additional odor generation.

Particularly, the amino acetate-based chelating agent may capture multivalent metal components required for the growth and development of a cell membrane, thereby effectively inhibiting bacterial growth.

The chelating agent may be included in the content of 0.1 to 2.0 parts by weight, based on 100 parts by weight of the base resin. Specifically, the chelating agent may be included in the content of 0.1 parts by weight or more, 0.2 parts by weight or more, 0.4 parts by weight or more, or 0.6 parts by weight or more and 2.0 parts by weight or less, 1.5 parts by weight or less, or 1.0 parts by weight or less, based on 100 parts by weight of the base resin.

In case used in the above content range, it can realize the property of effectively inhibiting bacteria without deteriorating unique absorption properties of super absorbent polymer, thereby remarkably improving deodorization capacity of super absorbent polymer.

The chelating agent may be mixed in the form of a salt in an aqueous solution and used, and thus, the above content range is based on solid content.

The composition of super absorbent polymer may comprise an iodine-based compound. The iodine-based compound may be a metal iodide salt. The metal iodide salt may be added during the preparation process in the form wherein one or more selected from the group consisting of CuI, NaI, and KI, and $I_2$ are dissolved together in water, or in the form of powders obtained by drying the aqueous solution. The metal iodide salt may be added to super absorbent polymer to confer deodorization property, along with the diester-based compound. The metal iodide salt acts on most malodorous

substances and works in general, by oxidizing malodorous substances to remove them.

The iodine-based compound may be included in the content of 0.1 to 5.0 parts by weight, based on 100 parts by weight of the base resin. Specifically, it may be included in the content of 0.1 parts by weight or more, 0.2 parts by weight or more, 0.4 parts by weight or more, or 0.6 parts by weight or more and 5.0 parts by weight or less, 4.0 parts by weight or less, 3.0 parts by weight or less, 2.0 parts by weight or less, or 1.0 parts by weight or less, based on 100 parts by weight of the base resin.

The composition of super absorbent polymer may comprise organic acid. The organic acid may be one or more selected from the group consisting of citric acid, acetic acid, formic acid, fumaric acid, lactic acid, and propionic acid. Specifically, the organic acid may be citric acid. The organic acid may exhibit deodorization effect in the super absorbent polymer along with the diester-based compound.

The organic acid may be included in the content of 0.1 to 5.0 parts by weight, based on 100 parts by weight of the base resin. Specifically, it may be included in the content of 0.1 parts by weight or more, 0.2 parts by weight or more, 0.4 parts by weight or more, or 0.6 parts by weight or more and 5.0 parts by weight or less, 4.0 parts by weight or less, 3.0 parts by weight or less, 2.0 parts by weight or less, or 1.0 parts by weight or less, based on 100 parts by weight of the base resin.

**(Preparation method of composition of super absorbent polymer)**

According to one embodiment of the invention, there is provided a method for preparing a composition of super absorbent polymer.

The method for preparing a composition of super absorbent polymer comprises steps of:

subjecting acrylic acid-based monomers having at least partially neutralized acid groups to crosslinking polymerization, in the presence of an internal crosslinking agent and a polymerization initiator, to form hydrogel polymer (step 1);
drying and grinding the hydrogel polymer to prepare base resin comprising crosslinked polymer (step 2);
mixing a surface crosslinking agent with the base resin to prepare a mixture (step 3); and
heat treating the mixture to prepare super absorbent polymer having a surface crosslink layer formed on the surface of the base resin (step 4),
wherein a diester-based compound is included during the surface crosslinking reaction, after the surface crosslinking reaction, or both

The method for preparing super absorbent polymer broadly comprises a step of polymerizing acrylic acid-based monomers to prepare hydrogel polymer, and a step of grinding the same. Further, to improve various properties of super absorbent polymer, surface crosslinking of the surface of prepared super absorbent polymer is used.

In the present disclosure, a diester-based compound is mixed with the surface crosslinked super absorbent polymer to provide a composition of super absorbent polymer having deodorization property.

Meanwhile, the expression 'mixed in step A' means to be additionally mixed with a target mixture while the step A is conducted, and it may mean to be divided more than once and mixed at the content ratio aimed in corresponding step. Meanwhile, the expression 'mixed before and after step A' means to be additionally mixed before the step A is conducted or after the step A is finished.

Hereinafter, the invention will be explained in detail according to steps.

**(Step 1)**

The step 1 is a step of preparing hydrogel polymer, and specifically, a step wherein a monomer composition comprising acrylic acid-based monomers having at least partially neutralized acid groups is subjected to crosslinking polymerization to form hydrogel polymer.

The acrylic acid-based monomers may be any monomers commonly used in the preparation of super absorbent polymer. Specifically, the acrylic acid-based monomer may be a compound represented by the following Chemical Formula 2:

[Chemical Formula 2] $R^1$-$COOM^1$

In the Chemical Formula 2,

$R^1$ is a C2-5 alkyl group comprising an unsaturated bond,
$M^1$ is a hydrogen atom, a monovalent or divalent metal, an ammonium group or an organic amine salt.

Preferably, the monomers may be one or more selected from the group consisting of acrylic acid, methacrylic

acid, and monovalent metal salts, divalent metal salts, ammonium salts and organic amine salts thereof.

The acrylic acid-based monomers may have acid groups, and at least a part of the acid groups may be neutralized. Preferably, the monomers partially neutralized with alkali substance such as sodium hydroxide, potassium hydroxide, ammonium hydroxide and the like, may be used.

Wherein, the degree of neutralization of the monomers may be 40 to 95 mol%, or 40 to 80 mol%, or 45 to 75 mol%. Although the range of the neutralization degree may vary according to the final properties, if the neutralization degree is too high, neutralized monomers may be precipitated, and thus, it may be difficult to smoothly progress polymerization, and to the contrary, if the neutralization degree is too low, absorption force of polymer may be significantly lowered, and it may exhibit elastic rubber-like properties, which is difficult to handle.

In the monomer composition, a polymerization initiator commonly used for the preparation of super absorbent polymer may be included.

As the polymerization initiator, a thermal polymerization initiator or a photopolymeirzation initiator may be used according to polymerization method. However, even when photopolymerization is progressed, since a certain amount of heat is generated by UV irradiation, etc., and heat is generated to some degree according to the progression of an exothermic polymerization reaction, a thermal polymerization initiator may be additionally included.

As the photopolymerization initiator, one or more selected from the group consisting of benzoin ether, dialkyl acetophenone, hydroxyl alkylketone, phenyl glyoxylate, benzyl dimethyl ketal, acyl phosphine, and $\alpha$-aminoketone may be used. Among them, as specific examples of acyl phosphine, commercially available lucirin TPO, i.e., 2,4,6-trimethyl-benzoyl-trimethyl phosphine oxide may be used. More various photopolymerization initiators are described in Reinhold Schwalm, "UV Coatings: Basics, Recent Developments and New Application(Elsevier 2007)", page 115, which may be referred to.

As the thermal polymerization initiator, one or more selected from the group consisting of a persulfate initiator, an azo initiator, hydrogen peroxide, and ascorbic acid may be used. Specific examples of the persulfate initiator may include sodium persulfate ($Na_2S_2O_8$), potassium persulfate ($K_2S_2O_8$), ammonium persulfate ($(NH_4)_2S_2O_8$), etc., and, specific examples of the azo initiator may include 2,2-azobis(2-amidinopropane)dihydrochloride, 2,2-azobis-(N,N-dimethylene) isobutyramidinedihydrochloride, 2-(carbamoylazo)isobutyronitril, 2,2-azobis[2-(2-imidazolin-2-yl)propane]dihydrochloride, 4,4-azobis-(4-cyanovalericacid), etc. More various thermal initiators are described in "Principle of Polymerization (Wiley, 1981)", Odian, page 203, which may be referred to.

Such a polymerization initiator may be added at the concentration of 0.001 to 1 wt%, or 0.005 to 0.1 wt%, based on the monomer composition. If the concentration of the polymerization initiator is too low, polymerization speed may become slow, and remaining monomers may be extracted in a large quantity in the final product. And, if the concentration of the polymerization initiator is too high, polymer chains making up the network of super absorbent polymer may become short, and thus, extractable contents may increase, and absorbency under pressure of super absorbent polymer may be lowered, thereby deteriorating the properties of polymer.

Meanwhile, polymerization of the monomer composition is conducted in the presence of a crosslinking agent ("internal crosslinking agent") to improve the properties of polymer polymerized from acrylic acid-based monomers. The crosslinking agent is for internal crosslinking of hydrogel polymer, and may be used separately from a "surface crosslinking agent" described later.

As the internal crosslinking agent, any compounds can be used so long as they enable the introduction of crosslink during polymerization of the acrylic acid-based monomers. As non-limiting examples, as the internal crosslinking agent, multifunctional crosslinking agents such as N,N'-methylenebisacrylamide, trimethylolpropane tri(meth)acrylate, ethyleneglycol di(meth)acrylate, polyethyleneglycol di(meth)acrylate, propyleneglycol di(meth)acrylate, polypropyleneglycol di(meth)acrylate, butanediol di(meth)acrylate, butyleneglycol di(meth)acrylate, diethyleneglycol di(meth)acrylate, hexanediol di(meth)acrylate, triethyleneglycol di(meth)acrylate, tripropyleneglycol di(meth)acrylate, tetraethyleneglycol di(meth)acrylate, dipentaerythritol pentaacrylate, glycerin tri(meth)acrylate, pentaerythritol tetraacrylate, triarylamine, ally (meth)acrylate, ethyleneglycol diglycidyl ether, propyleneglycol, glycerin, or ethylenecarbonate may be used alone or in combinations, but it is not limited thereto.

Such an internal crosslinking agent may be used at the concentration of 0.001 to 1 wt%, or 0.01 to 0.8 wt%, or 0.1 to 0.7 wt%, based on the monomer composition. If the concentration of the internal crosslinking agent is too low, absorption speed of polymer may decrease, and gel strength may become weak. To the contrary, if the concentration of the internal crosslinking agent is too high, absorption force of super absorbent polymer may decrease, and thus, it may not be preferable as an absorbent.

Further, the crosslinking polymerization of the monomer composition may be conducted in the presence of a blowing agent, according to the necessity and degree of improvement in absorption speed. Such a blowing agent may be decomposed during the crosslinking polymerization reaction to generate gas, thus forming pores in the hydrogel polymer. As the result, when such a blowing agent is additionally used, more developed porous structure is formed in super absorbent polymer, and thus, absorption speed of super absorbent polymer may be further improved.

As non-limiting examples, the blowing agent may include one or more compounds selected from the group

consisting of sodium bicarbonate, sodium carbonate, potassium bicarbonate, potassium carbonate, calcium bicarbonate, calcium carbonate, magnesium bicarbonate, magnesium carbonate, azodicarbonamide (ADCA), dinitroso pentamethylene tetramine (DPT), p,p'-oxybis(benzenesulfonyl hydrazide) (OBSH), p-toluenesulfonyl hydrazide (TSH), sucrose stearate, sucrose palmitate, and sucrose laurate.

The blowing agent may be included in the monomer composition in the content of 1000 to 4000 ppmw, and more specifically, in the content of 1000 ppmw or more, or 1100 ppmw or more, or 1200 ppmw or more; and 4000 ppmw or less, or 3500 ppmw or less, or 3000 ppmw or less.

Besides, the monomer composition may further comprise a plasticizer, preservation stabilizer, an antioxidant, and the like, as necessary.

Further, the monomer composition may be prepared in the form of a solution in which the above-explained raw materials including acrylic acid-based monomers, polymerization initiator, internal crosslinking agent, blowing agent, and the like are dissolved in a solvent.

Wherein, the solvent that can be used is not limited so long as it can dissolve the above explained raw materials. For example, as the solvent, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methylcellosolve acetate, N,N-dimethylacetamide, or a mixture thereof may be used.

The formation of hydrogel polymer through the polymerization of the monomer composition may be conducted by a common polymerization method, and the process is not specifically limited.

As non-limiting examples, the polymerization method is largely classified into thermal polymerization and photopolymerization according to the kind of energy source, and thermal polymerization may be progressed in a reactor equipped with a stirring axis such as a kneader, and photopolymerization may be progressed in a reactor equipped with a movable conveyer belt.

For example, hydrogel polymer may be obtained by adding the above- described monomer composition into a reactor such as a kneader equipped with a stirring axis, and supplying hot air or heating the reactor to progress thermal polymerization. Wherein, the hydrogel polymer discharged to the outlet of the reactor may be in the size of a few millimeters to a few centimeters according to the shape of the stirring axis equipped in the reactor. Specifically, the size of obtained hydrogel polymer may vary according to the concentration of the added monomer composition and the addition speed, etc., and commonly, hydrogel polymer with particle diameter of 2 to 50 mm may be obtained.

For another example, in case photopolymerization of the monomer composition is progressed in a reactor equipped with a movable conveyer belt as explained above, hydrogel polymer in the form of a sheet may be obtained. Wherein, the thickness of the sheet may vary according to the concentration of the added monomer composition and the addition speed, but commonly, it is preferable that the thickness of the sheet is controlled to 0.5 to 10 cm, to enable uniform polymerization of the entire sheet, and simultaneously, secure production speed, and the like.

Hydrogel polymer thus obtained may have a moisture content of 40 to 80 wt%. Wherein, the "moisture content" is the content of moisture occupied based on the total weight of hydrogel polymer, and it means a value obtained by subtracting the weight of polymer of a dry state from the weight of hydrogel polymer. Specifically, it is defined as a value calculated by measuring the weight loss according to moisture evaporation in the polymer while raising the temperature of polymer through infrared heating to dry. Wherein, the temperature is raised from room temperature to about 180°C and then maintained at 180°C, and the total drying time may be set to 20 minutes including a temperature raising step of 5 minutes.

**(Step 2)**

The step 2 of the present disclosure is a step of drying and grinding the hydrogel polymer prepared in step 1, to form base resin.

Specifically, to increase drying efficiency of hydrogel polymer and affect the morphology of super absorbent polymer, thus affecting various properties of super absorbent polymer including absorption speed, particularly to improve absorption speed of super absorbent polymer, in the present disclosure, a step of coarse grinding may be further included before drying the hydrogel polymer. Hereinafter, to distinguish it from grinding after drying, the grinding before drying is referred to as 'coarse grinding' herein for convenience.

The grinder used for the grinding is not limited, but specifically, it may include anyone selected from the group consisting of vertical pulverizer, turbo cutter, turbo grinder, rotary cutter mill, cutter mill, disc mill, shred crusher, crusher, chopper and disc cutter, but is not limited thereto.

Wherein, the coarse grinding step may be conducted such that the particle diameter of hydrogel polymer may become about 2 mm to about 10 mm. Grinding to particle diameter less than 2 mm would not be technically easy due to high moisture content of hydrogel polymer, and it may cause aggregation between ground particles. Meanwhile, if grinding to

particle diameter greater than 10 mm, the effect for increasing the efficiency of the subsequent drying step may be insignificant.

The drying may be conducted at a temperature of 120 to 250°C, 140 to 200°C, or 150 to 190°C. Wherein, the drying temperature may be defined as the temperature of a heat transfer medium supplied for drying or the temperature inside a drying reactor containing a heat transfer medium and polymer in the drying process. If the drying temperature is too low and drying time is lengthened, process efficiency may be deteriorated, and thus, to prevent the same, the drying temperature is preferably 120°C or more. And, if the drying temperature is higher than needed, the surface of hydrogel polymer may be excessively dried, and thus, generation of fine powders may increase in the subsequent grinding step, and the properties of the final polymer may be deteriorated, and thus, to prevent the same, the drying temperature is preferably 250°C or less.

Wherein, the drying time in the drying step is not specifically limited, but considering process efficiency and properties of polymer, and the like, it may be controlled to 20 minutes to 90 minutes under the above-described drying temperature.

The drying may be conducted using a common medium, and for example, the drying may be conducted by hot air supply, infrared irradiation, microwave irradiation or UV irradiation to the ground hydrogel polymer, and the like.

Further, preferably, drying is conducted such that dried polymer may have a moisture content of 0.1 to 10 wt%. Namely, in case the moisture content of dried polymer is less than 0.1 wt%, due to excessive drying, production cost may increase and crosslinked polymer may be degraded. Further, if the moisture content of dried polymer is greater than 10 wt%, defects may be generated in the subsequent process.

Subsequently, the dried hydrogel polymer may be ground. It is a step for optimizing the surface area of base resin powder and super absorbent polymer. The grinding may be conducted so that the particle diameter of ground polymer may become 150 to 850 μm.

Wherein, as a grinder, common grinders such as a pin mill, a hammer mill, a screw mill, a roll mill, a disc mill, a jog mill, and the like may be used.

Further, to manage the properties of the finally productized super absorbent polymer, a step of selectively classifying particles having particle diameters of 150 to 850 μm in the polymer particles obtained through the grinding step, is conducted.

Passing through the classification step, base resin may be obtained. Such base resin may have particle diameter of 150 to 850 μm, and may comprise fine powders with particle diameters less than 150 μm in the content of 2 wt% or less, or 1 wt% or less.

Further, after drying and grinding to obtain based resin powders, a step of mixing zirconium phosphate may be further conducted. Wherein, the zirconium phosphate may be pre-dry mixed. Namely, the zirconium phosphate may be mixed with base resin before surface crosslinking, as a solid content, by a dry physical method. The zirconium phosphate is a substance capable of physically adsorbing malodorous substances. Thus, by further mixing zirconium phosphate with base resin powders, additional deodorization effect can be obtained.

Wherein, zirconium phosphate may be included in the content of 5.0 parts by weight or less, based on 100 parts by weight of the base resin. It is used to additionally increase deodorization capacity, and may not be included, but in case included, specifically, it may be included in the content of 0.5 parts by weight or more, 0.8 parts by weight or more, 1.0 parts by weight or more, 1.3 parts by weight or more, 1.5 parts by weight or more, or 1.8 parts by weight or more and 5.0 parts by weight or less, 4.0 parts by weight or less, 3.0 parts by weight or less or 2.0 parts by weight or less, based on 100 parts by weight of the base resin. If zirconium phosphate is mixed too little, deodorization effect obtained thereby may be insignificant, and if included too much, surface crosslinking may not be properly achieved, and thus, absorbency under pressure, and the like, may be deteriorated.

**(Step 3)**

The step 3 of the present disclosure is a step of mixing a surface crosslinking agent with the base resin powders prepared in the step 2.

The surface crosslinking composition used in step 3 comprises a surface crosslinking agent, and the surface crosslinking agent is not specifically limited so long as it is commonly used for surface crosslinking of super absorbent polymer and is a compound capable of reacting with the functional groups of the polymer.

Preferably, to improve the properties of produced super absorbent polymer, as the surface crosslinking agent, one or more selected from the group consisting of polyhydric alcohol compounds; epoxy compounds; polyamine compounds; haloepoxy compounds; condensation products of haloepoxy compounds; oxazoline compounds; mono-, di- or polyoxazolidinone compounds; cyclic urea compounds; multivalent metal salts; and alkylene carbonate compounds may be used.

Specifically, as the examples of the polyhydric alcohol compound, one or more selected from the group consisting of mono-, di-, tri- tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexandiol, and 1,2-cyclohexanedimethanol may be used.

Further, as the epoxy compound, ethylene glycol diglycidyl ether and glycidol, and the like may be used, and as the polyamine compound, one or more selected from the group consisting of ethylenediamine, diethylenetriamine, triethylenetetramine, tetraethylenepentamine, pentaethylenehexamine, polyethyleneimine, and polyamidepolyamine may be used.

Further, as the haloepoxy compound, epichlorohydrin, epibromohydrin, and $\alpha$-methylepichlorohydrin may be used, and as the mono-, di- or polyoxazolidinone compound, for example, 2-oxazolidinone, and the like may be used.

Further, as the alkylene carbonate compound, ethylene carbonate, and the like may be used. These compounds may be used alone or in combinations. Meanwhile, to increase the efficiency of the surface crosslinking process, among these surface crosslinking agents, one or more kinds of C2-10 polyhydric alcohol compounds may be included.

The content of the surface crosslinking agent added may be appropriately selected according to the kind of the surface crosslinking agent added and reaction conditions, but commonly, it may be about 0.001 to about 5 parts by weight, preferably about 0.01 to about 3 parts by weight, more preferably about 0.05 to about 2 parts by weight, based on 100 parts by weight of the polymer.

If the content of the surface crosslinking agent is too small, a surface crosslinking reaction may hardly occur, and if it is greater than 5 parts by weight, based on 100 parts by weight of the polymer, due to the progression of excessive surface crosslinking reaction, absorption capacity and properties may be deteriorated.

Meanwhile, the step of forming a surface crosslink layer may be conducted while the surface crosslinking composition further comprises inorganic materials. As such inorganic material, one or more selected from the group consisting of silica, clay, alumina, silica-alumina composite material, titania, zinc oxide and aluminum sulfate may be used. The inorganic material may be used in the form of powder or liquid, and particularly, alumina powder, silica-alumina powder, titania powder, or a nano silica solution. The inorganic material may be used in the content of about 0.001 to about 1 part by weight, based on 100 parts by weight of the base resin.

Further, a diester-based compound may be mixed with the base resin along with the surface crosslinking agent. The diester-based compound can inhibit odor of absorbed materials to confer deodorization capacity to super absorbent polymer.

The diester-based compound of one embodiment may be represented by the following Chemical Formula 1:

[Chemical Formula 1]

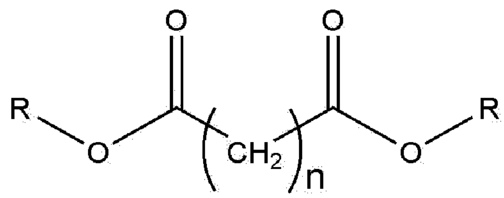

In the Chemical Formula 1, n may be an integer of 1 to 10, specifically an integer of 2 to 4.

R may be a $C_{1-20}$ linear or branched alkyl group. Specifically, R may be a $C_{3-4}$ linear or branched alkyl group. For example, R may be isopropyl or isobutyl.

The diester-based compound may include one or more selected from the group consisting of diisopropyl adipate, diisobutyl succinate, diisobutyl glutarate, and diisobutyl adipate. Specifically, the diester-based compound may include one or more selected from the group consisting of diisopropyl adipate, diisobutyl succinate, and diisobutyl adipate.

The diester-based compound may be included in the content of 0.1 to 5.0 parts by weight, based on 100 parts by weight of the base resin. Specifically, the diester-based compound may be included in the content of 0.1 parts by weight or more, 0.2 parts by weight or more, 0.3 parts by weight or more, or 0.4 parts by weight or more and 5.0 parts by weight or less, 4.0 parts by weight or less, 3.0 parts by weight or less, 2.0 parts by weight or less, 1.0 parts by weight or less or 0.5 parts by weight or less, based on 100 parts by weight of the base resin.

To exhibit deodorization capacity of an aimed level while maintaining unique absorption properties of super absorbent polymer, in the present disclosure, it is preferable that the diester-based compound, which is deodorization substance, is included in the above content range.

The diester-based compound may be mixed with based resin along with the surface crosslinking agent in the form of a solution or an emulsion. Alternatively, the diester-based compound may be mixed with based resin by spraying the diester-based compound of the state of a solution or an emulsion, after adding the surface crosslinking agent. In case the diester-based compound is used in the state of an emulsion, the emulsifier may be a surfactant, particularly a naturally-derived surfactant, for example, lecithin, and the like. In this case, the diester-based compound may exist in the surface crosslink layer.

Meanwhile, a method for mixing the base resin with the surface crosslinking agent may be appropriately selected without specific limitations, so long as it can uniformly mix them.

For example, a method of putting the surface crosslinking agent and the base resin in a reactor and mixing them, a method of spraying the surface crosslinking agent to the surface of the base resin, a method of continuously feeding the base resin and the surface crosslinking agent to a continuously operated mixer and mixing, and the like, may be used.

Wherein, the surface crosslinking agent may be an aqueous solution, and in case the solid content in the solution is 1 wt% or more, 3 wt% or more, 5 wt% or more, 10 wt% or more, and 50 wt% or less, 30 wt% or less, or 20 wt% or less, it may be appropriate to uniformly disperse in the base resin, and simultaneously, agglomeration of the base resin may be prevented.

**(Step 4)**

Step 4 is a step for reacting the base resin and surface crosslinking agent to form an interpenetrating polymer network on the surface of the crosslinked polymer included in the base resin, thereby further improving the properties of super absorbent polymer. Through such surface modification, on the surface of the ground base resin particles, a surface crosslink layer is formed.

The formation of the surface crosslink layer may be conducted by a common method of increasing the crosslinking density of polymer particle surface, and for example, it may be conducted by mixing the ground polymer with a surface crosslinking solution comprising a surface crosslinking agent, and heat treating the mixture to subject it to a crosslink reaction.

The step 4 may be conducted at a temperature of about 80°C to about 250°C. More specifically, the surface crosslinking process may be conducted at a temperature of about 100°C to about 220°C, or about 110°C to about 200°C, or about 120°C to about 190°C, for about 10 minutes to about 2 hours, or about 20 minutes to about 60 minutes. If the crosslinking reaction temperature is less than 160°C or the reaction time is too short, a surface crosslinking reaction may not sufficiently occur, and thus, penetration degree may be lowered, and if the crosslinking reaction temperature is greater than 200°C or the reaction time is too long, water retention capacity may be lowered.

A temperature rise means for the surface crosslinking reaction is not specifically limited. A heat transfer medium may be supplied, or a heat source may be directly supplied for heating. Wherein, as the kind of heat transfer media that can be used, temperature-increased fluids such as steam, hot air, hot oil, and the like may be used, but the invention is not limited thereto, and the temperature of heat transfer medium supplied may be appropriately selected considering the means of heat transfer medium, temperature rise means, and target temperature. Meanwhile, as the heat source directly supplied, electric heating, and gas heating may be mentioned, but the present disclosure is not limited thereto.

In addition, a diester-based compound may be mixed with the super absorbent polymer having a surface crosslink layer. The kind, mixing amount, mixing form of the diester-based compound are as explained in the step 3. In case mixed as explained, the diester-based compound may exist separately from the super absorbent polymer. In this case, the dieter-based compound exists on the surface of the surface crosslink layer formed during the surface crosslinking step, and thus, a contact area with odor increases, and deodorization capacity may be improved.

Further, the diester-based compound may be used together the surface crosslinking agent and made to exist in the surface crosslink layer, and then, the diester-based compound may be mixed with super absorbent polymer having a surface crosslink layer. In this case, it may exist both in the surface crosslink layer and separately from the super absorbent polymer.

Further, one or more additives selected from the group consisting of a chelating agent, an iodine-based compound and organic acid may be further mixed with the super absorbent polymer having a surface crosslink layer. Similarly, the additives may exist on the surface of the surface crosslink layer formed in the surface crosslinking step, thus increasing a contact area with odor and improving deodorization capacity.

A chelating agent may be mixed with the super absorbent polymer having a surface crosslink layer. In the case of a hygienic product comprising a super absorbent polymer composition, bacteria derived from skin, and the like, may meet absorbed liquids to additionally generate odor by bacterial growth, but the chelating agent mixed can inhibit such bacterial growth.

The chelating agent may include an amino acetate-based chelating agent. Specifically, the amino acetate-based chelating agent may include one or more selected from the group consisting of ethylene diamine tetraacetic acid (EDTA), L-glutamic acid diacetate (GLDA), methyl glycine diacetic acid (MGDA), hydroxyethyl ethylenediamine triacetic acid (HEDTA), ethanol diglycinic acid (EDG), diethylenetriamine pentaacetic acid (DTPA), and salts thereof. More specifically, the chelating agent may be ethylene diamine tetraacetic acid (EDTA).

Particularly, the amino acetate-based chelating agent can effectively inhibit growth of bacteria such E. coli, generated by odor generating substance. As a wearing time of a product passes, bacterial growth is accelerated by the odor generating substance remaining in the product, thereby generating additional odor, but the amino acetate-based chelating agent may inhibit such bacterial growth to effectively reduce additional odor generation.

Particularly, the amino acetate-based chelating agent may capture multivalent metal components required for the growth and development of a cell membrane, thereby effectively inhibiting bacterial growth.

The chelating agent may be included in the content of 0.1 to 2.0 parts by weight, based on 100 parts by weight of the base resin. Specifically, the chelating agent may be included in the content of 0.1 parts by weight or more, 0.2 parts by weight or more, 0.4 parts by weight or more, or 0.6 parts by weight or more and 2.0 parts by weight or less, 1.5 parts by weight or less, or 1.0 parts by weight or less, based on 100 parts by weight of the base resin.

In case used in the above content range, it can realize the property of effectively inhibiting bacteria without deteriorating unique absorption properties of super absorbent polymer, thereby remarkably improving deodorization capacity of super absorbent polymer.

The chelating agent may be mixed in the form of a salt in an aqueous solution and used, and thus, the above content range is based on solid content.

An iodine-based compound may be mixed with the super absorbent polymer having a surface crosslink layer. The iodine-based compound may be a metal iodide salt. The metal iodide salt may be added during the preparation process in the form wherein one or more selected from the group consisting of CuI, NaI, and KI, and $I_2$ are dissolved together in water, or in the form of powders obtained by drying the aqueous solution. The metal iodide salt may be added to super absorbent polymer to confer deodorization property, along with the diester-based compound. The metal iodide salt acts on most malodorous substances and works in general, by oxidizing malodorous substances to remove them.

The iodine-based compound may be included in the content of 0.1 to 5.0 parts by weight, based on 100 parts by weight of the base resin. Specifically, it may be included in the content of 0.1 parts by weight or more, 0.2 parts by weight or more, 0.4 parts by weight or more, or 0.6 parts by weight or more and 5.0 parts by weight or less, 4.0 parts by weight or less, 3.0 parts by weight or less, 2.0 parts by weight or less, or 1.0 parts by weight or less, based on 100 parts by weight of the base resin.

Organic acid may be mixed with the super absorbent polymer having a surface crosslink layer. The organic acid may be one or more selected from the group consisting of citric acid, acetic acid, formic acid, fumaric acid, lactic acid, and propionic acid. Specifically, the organic acid may be citric acid. The organic acid may exhibit deodorization effect in the super absorbent polymer along with the diester-based compound.

The organic acid may be included in the content of 0.1 to 5.0 parts by weight, based on 100 parts by weight of the base resin. Specifically, it may be included in the content of 0.1 parts by weight or more, 0.2 parts by weight or more, 0.4 parts by weight or more, or 0.6 parts by weight or more and 5.0 parts by weight or less, 4.0 parts by weight or less, 3.0 parts by weight or less, 2.0 parts by weight or less, or 1.0 parts by weight or less, based on 100 parts by weight of the base resin.

In case deodorization substances and, if necessary, additives, and the like, are hydrated and added to the super absorbent polymer having a surface crosslink layer in the form of aqueous solutions, a drying step may be additionally conducted afterward.

Hereinafter, preferable examples are presented to assist in understanding of the invention. However, the following examples are presented only as the illustrations of the invention, and are not intended to limit the invention.

### Comparative Example 1

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

### Comparative Example 2

100 g of acrylic acid, 0.37 g of N,N'-methylenebisacrylamide as a crosslinking agent, 0.15 g of sodium persulfate

(SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/cm$^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 $\mu$m to 850 $\mu$m were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 $\mu$m was obtained.

Thereafter, while spraying an EDTA aqueous solution (EDTA concentration 40%) to the surface crosslinked super absorbent polymer, they were chopped (hole size 16 mm) and mixed. Wherein, EDTA was mixed so that the content became 0.6 parts by weight, based on 100 parts by weight of the base resin. Thereafter, a drying step was conducted at 80 °C for 25 minutes.

**Comparative Example 3**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/cm$^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 $\mu$m to 850 $\mu$m were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 $\mu$m was obtained.

Thereafter, while spraying an EDTA aqueous solution (EDTA concentration 40%) to the surface crosslinked super absorbent polymer, they were chopped (hole size 16 mm) and mixed. Wherein, EDTA was mixed so that the content became 1.0 parts by weight, based on 100 parts by weight of the base resin. Thereafter, a drying step was conducted at 80 °C for 25 minutes.

**Comparative Example 4**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/cm$^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 $\mu$m to 850 $\mu$m were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18

hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a cyclodextrin aqueous solution (cyclodextrin concentration 10%) to the surface crosslinked super absorbent polymer, they were chopped (hole size 16 mm) and mixed. Wherein, cyclodextrin was mixed so that the content became 0.5 parts by weight, based on 100 parts by weight of the base resin. Thereafter, a drying step was conducted at 80 °C for 25 minutes.

**Comparative Example 5**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a citric acid aqueous solution (citric acid concentration 20%) to the surface crosslinked super absorbent polymer, they were chopped (hole size 16 mm) and mixed. Wherein, citric acid was mixed so that the content became 1.0 part by weight, based on 100 parts by weight of the base resin. Thereafter, a drying step was conducted at 80 °C for 25 minutes.

**Comparative Example 6**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a citric acid aqueous solution (citric acid concentration 20%) to the surface crosslinked super absorbent polymer, they were chopped (hole size 16 mm) and mixed. Wherein, citric acid was mixed so that the content became 5.0 parts by weight, based on 100 parts by weight of the base resin. Thereafter, a drying step was conducted at 80 °C for 25 minutes.

**Example 1**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were

mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying diisopropyl adipate emulsion using lecithin as an emulsifier (diisopropyl adipate concentration 20%) and an EDTA aqueous solution (EDTA concentration 40%) to the surface crosslinked super absorbent polymer, they were chopped (hole size 16 mm) and mixed. Wherein, diisopropyl adipate was mixed so that the content became 0.5 parts by weight, based on 100 parts by weight of the base resin, and EDTA was mixed so that the content became 0.6 parts by weight, based on 100 parts by weight of the base resin.

**Example 2**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with an average particle diameter of 150 to 850 μm was obtained.

Thereafter, while spraying a diisopropyl adipate emulsion using lecithin as an emulsifier (diisopropyl adipate concentration 20%) and a citric acid aqueous solution (citric acid concentration 20%) to the surface crosslinked super absorbent polymer, they were chopped (hole size 16 mm) and to mixed. Wherein, diisopropyl adipate was mixed so that the content became 0.5 parts by weight, based on 100 parts by weight of the base resin, and citric acid was mixed so that the content became 0.6 parts by weight, based on 100 parts by weight of the base resin.

**Example 3**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by

weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a diisopropyl adipate emulsion using lecithin as an emulsifier (diisopropyl adipate concentration 20%) to the surface crosslinked super absorbent polymer, they were chopped (hole size 16 mm) and mixed. Wherein, diisopropyl adipate was mixed so that the content became 0.5 parts by weight, based on 100 parts by weight of the base resin.

**Example 4**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a diisopropyl adipate emulsion using lecithin as an emulsifier (diisopropyl adipate concentration 20%) to the surface crosslinked super absorbent polymer, they were chopped (hole size 16 mm) and mixed. Wherein, diisopropyl adipate was mixed so that the content became 1.0 part by weight, based on 100 parts by weight of the base resin.

**Example 5**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a diisobutyl succinate emulsion using lecithin as an emulsifier (diisobutyl succinate concentration 20%) to the surface crosslinked super absorbent polymer, they were chopped (hole size 16 mm) and mixed. Wherein, diisobutyl succinate was mixed so that the content became 0.5 parts by weight, based on 100 parts by weight of the base resin.

**Example 6**

100 g of acrylic acid, 0.37 g of N,N'-methylenebisacrylamide as a crosslinking agent, 0.15 g of sodium persulfate

(SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a diisobutyl succinate emulsion using lecithin as an emulsifier (diisobutyl succinate concentration 20%) to the surface crosslinked super absorbent polymer, they were chopped (hole size 16 mm) and mixed. Wherein, diisobutyl succinate was mixed so that the content became 1.0 part by weight, based on 100 parts by weight of the base resin.

**Example 7**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying diisobutyl adipate emulsion using lecithin as an emulsifier (diisobutyl adipate concentration 20%) to the surface crosslinked super absorbent polymer, they were chopped (hole size 16 mm) and mixed. Wherein, diisobutyl adipate was mixed so that the content became 0.5 parts by weight, based on 100 parts by weight of the base resin.

**Example 8**

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18

hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a diisopropyl adipate emulsion using lecithin as an emulsifier (diisopropyl adipate concentration 20%) and a citric acid aqueous solution (citric acid concentration 20%) to the surface crosslinked super absorbent polymer, they were chopped (hole size 16 mm) and mixed. Wherein, diisopropyl adipate was mixed so that the content became 0.5 parts by weight, based on 100 parts by weight of the base resin, and citric acid was mixed so that the content became 5.0 parts by weight, based on 100 parts by weight of the base resin.

### Example 9

100 g of acrylic acid, 0.37 g of N,N'-methylenebisacrylamide as a crosslinking agent, 0.15 g of sodium persulfate (SPS) as a thermal initiator, 0.008 g of benzoin ether as UV initiator, 40 g of caustic soda (NaOH), and 127 g of water were mixed, to prepare an aqueous monomer composition with a monomer concentration of 45.8 wt%. The aqueous monomer composition was injected into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The prepared hydrogel polymer was in the form of a sheet, and the sheet was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers of 150 μm to 850 μm were classified with a sieve to prepare a base resin.

Thereafter, to 100 parts by weight of the above-prepared base resin, a surface crosslinking agent (2.5 parts by weight of water, 0.1 parts by weight of ethyleneglycol diglycidyl ether (EX-810), 0.1 parts by weight of aluminum sulfate 18 hydrate (Al-S), and 0.1 parts by weight of silica (Aerosil A200)) was uniformly mixed, and then, a surface crosslinking reaction was progressed at 140°C for 30 minutes. After completing the surface treatment, by classification with a sieve, super absorbent polymer with particle diameter of 150 to 850 μm was obtained.

Thereafter, while spraying a diisopropyl adipate emulsion using lecithin as an emulsifier (diisopropyl adipate concentration 20%) and an EDTA aqueous solution (EDTA concentration 40%) to the surface crosslinked super absorbent polymer chopped (hole size 16 mm) and mixed. Wherein, diisopropyl adipate was mixed so that the content became 0.5 parts by weight, based on 100 parts by weight of the base resin, and EDTA was mixed so that the content became 1.0 part by weight, based on 100 parts by weight of the base resin.

### Experimental Example

For the compositions of super absorbent polymers prepared in Examples and Comparative Examples, the properties were measured as follows.

#### 1) Evaluation of odor

2 g of each super absorbent polymer prepared in Examples 1 to 9 and Comparative Examples 1 to 6 was put in a 500 mL glass bottle, and then, 50 mL of urine was added. After the glass bottle was sealed, aging was progressed in a constant temperature chamber for 3 hours. Wherein, the temperature of the constant temperature chamber was 35°C. After completing aging, the degree of odor was sensory evaluated. It was evaluated by total 9 people, and the degree of odor was evaluated as scores of 1 to 5, wherein as the score is closer to 1, odor is less, and as the score is closer to 5, odor is more severe. The average of the evaluation results of 9 people was shown in Table 1.

#### 2) Centrifuge Retention Capacity (CRC)

Centrifuge retention capacity of each super absorbent polymer composition of Examples and Comparative Examples by absorption rate under no load was measured according to European Disposables and Nonwovens Association, (EDANA) standard EDANA WSP 241.3.

Specifically, from each super absorbent polymer composition obtained through Examples and Comparative Examples, polymers classified to particle diameter range of 300 to 600 μm were obtained. $W_0$(g, about 0.2g) of such polymer was uniformly put in an envelope made of non-woven fabric, and the envelope was sealed, and then, dipped in a 0.9 wt% saline solution. After 30 minutes, the envelope was drained at 250G for 3 minutes using a centrifuge, and the weight $W_2$(g) of the envelope was measured. And, the same operation was conducted using an empty envelope without polymer, and then, the weight $W_1$(g) at that time was measured.

Using the weights thus obtained, CRC(g/g) was confirmed by the following Mathematical Formula 1.

[Mathematical Formula 1]

$$CRC\ (g/g) = \{[W_2(g) - W_1(g)]/W_0(g)\} - 1$$

**3) Absorbency under Pressure (AUP)**

For each super absorbent polymer composition of Examples and Comparative Examples, 0.7 psi absorbency under pressure was measured according to EDANA method WSP 242.3.

First, when measuring absorbency under pressure, the classified polymer used to measure CRC was used.

Specifically, on the bottom of a plastic cylinder having an inner diameter of 25 mm, a 400 mesh wire netting made of stainless steel was installed. And, $W_0$(g) of the super absorbent polymer was uniformly distributed on the screen under conditions of room temperature and 50% humidity, and a piston capable of uniformly applying a load of 0.7 psi was put thereon, wherein a piston having an outer diameter slightly smaller than 25 mm was used such that there was no gap with the inner wall of the cylinder and the up and down movement was not hindered. At this time, the weight $W_3$(g) of the apparatus was measured.

Inside a petri dish having a diameter of 150mm, a glass filter having a diameter of 90mm and a thickness of 5mm was laid, and a 0.9 wt% saline solution was poured to the same level as the upper side of the glass filter. And, one piece of a filter paper having a diameter of 90 mm was laid thereon. And then, the above measurement apparatus was put on the filter paper, and the solution was absorbed under pressure for 1 hour. After 1 hour, the measurement apparatus was lifted, and the weight $W_4$(g) was measured. Using the obtained weights, absorbency under pressure(g/g) was calculated according to the following Mathematical Formula 2.

[Mathematical Formula 2]

$$AUP(g/g) = [W_4(g) - W_3(g)]/W_0(g)$$

**4) Deodorization rate**

A deodorization rate was measured by an adsorption tube measurement method. As aldehyde-based malodorous substance, 3-methylbutanal was selected, as ketone-based malodorous substance, diacetyl was selected, and as sulfur compound-based malodorous substance, dimethyltrisulfide (DMTS) was selected to test deodorization capacities.

- Adsorption tube measurement method : Into a 500mL glass bottle, 1 g of super absorbent polymer was put, and then, 25mL of malodorous substance was introduced. And then, aging was progressed in a constant temperature chamber for 3 hours, followed by capturing for 20 minutes. Wherein, the temperature of the constant temperature chamber was 35°C, and $N_2$ flow rate was 250mL/min. The odor pushed out was then adsorbed to the connected adsorption tube, which was repeated twice per the same sample for capture. The result of capture was confirmed by GC analysis.
- 

  Deodorization rate (%) = {the amount of odor of Reference sample (super absorbent polymer of Comparative Example 1) measured by GC - the amount of odor of sample measured by GC} / the amount of odor of Reference sample (super absorbent polymer of Comparative Example 1) measured by GC X 100(%)

The evaluation results of odor, centrifuge retention capacity (CRC), and absorbency under pressure (AUP) are shown in Table 1, and deodorization rates are shown in Table 2.

[Table 1]

| | Odor evaluation | Absorption capacity | |
|---|---|---|---|
| | | CRC (g/g) | AUP (g/g) |
| Example 1 | 2 | 29.5 | 21.0 |

(continued)

| | Odor evaluation | Absorption capacity | |
|---|---|---|---|
| | | CRC (g/g) | AUP (g/g) |
| Example 2 | 2 | 28.8 | 20.9 |
| Example 3 | 3 | 29.1 | 19.5 |
| Example 4 | 1 | 27.1 | 21.1 |
| Example 5 | 3 | 29.8 | 20.6 |
| Example 6 | 2 | 30.1 | 19.9 |
| Example 7 | 2 | 30.2 | 19.4 |
| Example 8 | 1 | 27.8 | 20.3 |
| Example 9 | 3 | 28.5 | 20.2 |
| Comparative Example 1 | 5 | 29.2 | 20.4 |
| Comparative Example 2 | 5 | 30.1 | 19.9 |
| Comparative Example 3 | 5 | 31.8 | 19.2 |
| Comparative Example 4 | 5 | 29.8 | 19.1 |
| Comparative Example 5 | 4 | 26.5 | 20.4 |
| Comparative Example 6 | 3 | 28.9 | 18.2 |

[Table 2]

| | Malodorous substance inhibition rate (%) | | |
|---|---|---|---|
| | Aldehyde-based substance | Ketone-based substance | Sulfur compound-based substance |
| Example 1 | 84 | 59 | 21 |
| Example 2 | 76 | 58 | 20 |
| Example 3 | 77 | 49 | 23 |
| Example 4 | 94 | 72 | 30 |
| Example 5 | 64 | 55 | 21 |
| Example 6 | 78 | 64 | 28 |
| Example 7 | 66 | 42 | 21 |
| Example 8 | 88 | 74 | 34 |
| Example 9 | 76 | 60 | 19 |
| Comparative Example 1 | 1 | 4 | 10 |
| Comparative Example 2 | 3 | 0 | 2 |
| Comparative Example 3 | 0 | 0 | 4 |
| Comparative Example 4 | 10 | 5 | 4 |
| Comparative Example 5 | 6 | 6 | 5 |
| Comparative Example 6 | 4 | 6 | 4 |

As shown in the results of Table 1, in the case of Examples 1 to 9, compared to Comparative Example 1 without additives, deodorization capacity was excellent while maintaining absorption power to a similar level.

Further, in the case of Comparative Examples 2 and 3 wherein only a chelating agent was used without a diester-based compound, deodorization capacity tended to be low, compared to Examples. In the case of Comparative Examples

4 and 5 wherein cyclodextrin or citric acid was used alone, deodorization capacity was low, compared to Examples. In the case of Comparative Example 6 wherein citric acid was used in a large amount, although deodorization capacity was improved to a certain degree compared to other Comparative Examples, it was still inferior to Example 8 wherein a diester-based compound diisopropyl adipate was used together.

As shown in the results of Table 2, Comparative Examples 1 to 6 exhibited very inferior malodorous substance inhibition rates compared to Examples 1 to 9. Even in the case of Comparative Example 6 wherein citric acid was used in a large amount, malodorous substance inhibition rate was similar level to other Comparative Examples.

## Claims

1. A composition of super absorbent polymer comprising:

   a super absorbent polymer comprising base resin comprising crosslinked polymer formed by crosslinking polymerization of acrylic acid-based monomers having at least partially neutralized acid groups and an internal crosslinking agent, and a surface crosslink layer formed on the surface of the base resin, in which the crosslinked polymer is additionally crosslinked by a surface crosslinking agent; and a diester-based compound represented by the following Chemical Formula 1,
   wherein the diester-based compound is included in the surface crosslink layer of the super absorbent polymer, separately from the super absorbent polymer, or both:

   [Chemical Formula 1]

   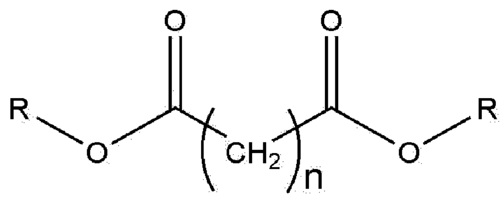

   in Chemical Formula 1, n is an integer of 1 to 10, and
   R is $C_{1-20}$ linear or branched alkyl.

2. The composition of super absorbent polymer according to claim 1, wherein the diester-based compound includes one or more selected from the group consisting of diisopropyl adipate, diisobutyl succinate, diisobutyl glutarate, and diisobutyl adipate.

3. The composition of super absorbent polymer according to claim 1, wherein the diester-based compound is included in a content of 0.1 to 5.0 parts by weight, based on 100 parts by weight of the base resin.

4. The composition of super absorbent polymer according to claim 1, further comprising one or more additives selected from the group consisting of a chelating agent, an iodine-based compound, and organic acid.

5. The composition of super absorbent polymer according to claim 4, wherein the chelating agent includes an amino acetate-based chelating agent.

6. The composition of super absorbent polymer according to claim 5, wherein the amino acetate-based chelating agent includes one or more selected from the group consisting of ethylene diamine tetraacetic acid (EDTA), L-glutamic acid diacetate (GLDA), methyl glycine diacetic acid (MGDA), hydroxyethyl ethylenediamine triacetic acid (HEDTA), ethanol diglycinic acid (EDG), diethylenetriamine pentaacetic acid (DTPA), and salts thereof.

7. The composition of super absorbent polymer according to claim 4, wherein the iodine-based compound is a metal iodide salt.

8. The composition of super absorbent polymer according to claim 4, wherein the organic acid is one or more selected from the group consisting of citric acid, acetic acid, formic acid, fumaric acid, lactic acid, and propionic acid.

9. A method for preparing a composition of super absorbent polymer, comprising steps of:

subjecting acrylic acid-based monomers having at least partially neutralized acid groups to crosslinking polymerization, in the presence of an internal crosslinking agent and a polymerization initiator, to form hydrogel polymer (step 1);
drying and grinding the hydrogel polymer to prepare base resin comprising crosslinked polymer (step 2);
mixing a surface crosslinking agent with the base resin to prepare a mixture (step 3); and
heat treating the mixture to prepare super absorbent polymer having a surface crosslink layer formed on the surface of the base resin (step 4),
wherein a diester-based compound represented by Chemical Formula 1 is included during the surface crosslinking reaction, after the surface crosslinking reaction, or both:

[Chemical Formula 1]

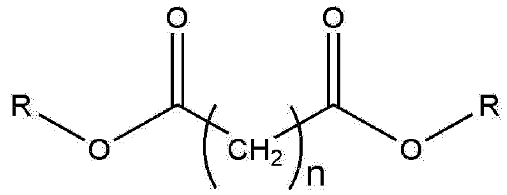

in Chemical Formula 1, n is an integer of 1 to 10, and
R is $C_{1-20}$ linear or branched alkyl.

**10.** The method for preparing a composition of super absorbent polymer according to claim 9, wherein the diester-based compound includes one or more selected from the group consisting of diisopropyl adipate, diisobutyl succinate, diisobutyl glutarate, and diisobutyl adipate.

**11.** The method for preparing a composition of super absorbent polymer according to claim 9, wherein the diester-based compound is mixed in an amount of 0.1 to 5.0 parts by weight, based on 100 parts by weight of the base resin.

**12.** The method for preparing a composition of super absorbent polymer according to claim 9, wherein, after the step 4, one or more additives selected from the group consisting of a chelating agent, an iodine-based compound, and organic acid are mixed with the super absorbent polymer having the surface crosslink layer.

**13.** The method for preparing a composition of super absorbent polymer according to claim 12, wherein the chelating agent includes an amino acetate-based chelating agent.

**14.** The method for preparing a composition of super absorbent polymer according to claim 12, wherein the iodine-based compound is a metal iodide salt.

**15.** The method for preparing a composition of super absorbent polymer according to claim 12, wherein the organic acid is one or more selected from the group consisting of citric acid, acetic acid, formic acid, fumaric acid, lactic acid, and propionic acid.

**INTERNATIONAL SEARCH REPORT**

International application No.
**PCT/KR2023/021573**

**A. CLASSIFICATION OF SUBJECT MATTER**

**C08K 5/11**(2006.01)i; **C08K 5/09**(2006.01)i; **C08K 5/17**(2006.01)i; **C08K 3/16**(2006.01)i; **C08L 33/04**(2006.01)i; **C08J 3/24**(2006.01)i

According to International Patent Classification (IPC) or to both national classification and IPC

**B. FIELDS SEARCHED**

Minimum documentation searched (classification system followed by classification symbols)

C08K 5/11(2006.01); A61L 15/34(2006.01); A61L 15/44(2006.01); A61L 15/60(2006.01); A61L 2/18(2006.01); A61L 9/00(2006.01); A61L 9/01(2006.01); B01J 20/04(2006.01); C08J 3/24(2006.01); C11B 9/00(2006.01); C11D 3/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고흡수성 수지(super-absorbent resin, SAP), 다이에스터(diester), 악취(malodor), 소취(deodor), 킬레이트제(chelator), 요오드화 금속염(metal iodide), 유기산 (organic acid)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0076196 A (LG CHEM, LTD.) 08 June 2022 (2022-06-08)<br>See claims 1-13; and paragraphs [0088] and [0089]. | 1-15 |
| Y | JP 2003-027084 A (KAWASAKI, Kiyomitsu) 29 January 2003 (2003-01-29)<br>See claims 1 and 4. | 1-15 |
| Y | KR 10-1635576 B1 (BIOCLICK CO., LTD.) 04 July 2016 (2016-07-04)<br>See claim 3; and paragraph [0023]. | 7,14 |
| Y | WO 2019-206429 A1 (ESSITY HYGIENE AND HEALTH AKTIEBOLAG) 31 October 2019 (2019-10-31)<br>See pages 21 and 22; and claims 1-24. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 April 2024** | **12 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/021573

C. DOCUMENTS CONSIDERED TO BE RELEVANT

| Category* | Citation of document, with indication, where appropriate, of the relevant passages | Relevant to claim No. |
|---|---|---|
| Y | US 5403548 A (AIBE, T. et al.) 04 April 1995 (1995-04-04)<br>See claim 1. | 7,14 |

Form PCT/ISA/210 (second sheet) (July 2022)

**INTERNATIONAL SEARCH REPORT**
**Information on patent family members**

International application No.
**PCT/KR2023/021573**

| Patent document cited in search report | Publication date (day/month/year) | Patent family member(s) | Publication date (day/month/year) |
|---|---|---|---|
| KR 10-2022-0076196 A | 08 June 2022 | None | |
| JP 2003-027084 A | 29 January 2003 | None | |
| KR 10-1635576 B1 | 04 July 2016 | None | |
| WO 2019-206429 A1 | 31 October 2019 | AU 2018-420448 A1 | 12 November 2020 |
| | | AU 2018-420448 B2 | 03 February 2022 |
| | | BR 112020018441 A2 | 29 December 2020 |
| | | CN 111989125 A | 24 November 2020 |
| | | CO 2020012401 A2 | 30 October 2020 |
| | | EP 3784300 A1 | 03 March 2021 |
| | | JP 2021-518790 A | 05 August 2021 |
| | | MX 2020011350 A | 24 November 2020 |
| | | US 2021-137754 A1 | 13 May 2021 |
| US 5403548 A | 04 April 1995 | EP 0558289 A1 | 01 September 1993 |
| | | JP 06-126166 A | 10 May 1994 |
| | | JP 3370374 B2 | 27 January 2003 |
| | | KR 10-0202321 B1 | 15 June 1999 |
| | | KR 10-1993-0017613 A | 20 September 1993 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230020907


### Non-patent literature cited in the description


- **REINHOLD SCHWALM**. UV Coatings: Basics, Recent Developments and New Application. Elsevier, 2007, 115
- **ODIAN**. Principle of Polymerization. Wiley, 1981, 203